# FASCICULE DE BREVET EUROPEEN

(11) **EP 1 810 560 B1**
(45) Date de publication et mention de la délivrance du brevet: **31.03.2010**
(21) Numéro de dépôt: 07290052.5
(22) Date de dépôt: 15.01.2007
(51) Int. Cl.: A01B 29/04, B60C 3/00

(54) **Pneumatique de type semi-creux pour machine agricole**
Domreifen für landwirtschaftliche Maschine
Semi-hollow tyre for a farming machine

(30) Priorité: 20.01.2006 FR 0600528
(43) Date de publication de la demande: 25.07.2007
(73) Titulaire: OTICO, 77650 Longueville (FR)
(72) Inventeur: Phely, Olivier, 77520 Thenisy (FR)
(74) Mandataire: Bezault, Jean

(56) Documents cités:
- FR-A1- 2 763 279
- US-A- 5 628 372

## Description

L'invention concerne les pneumatiques à usages spéciaux, et notamment ceux destinés à être utilisés avec des matériels agricoles, en particulier des rouleaux destinés à des machines combinées à des semoirs, à des outils de préparation du sol, etc.

Le FR-A-2 763 279, au nom de la Demanderesse, décrit un pneumatique de type semi-creux à profil en dôme pour un tel usage. Ces pneumatiques sont destinés à être enfilés autour d'un tube central pour constituer un rouleau utilisable dans des machines agricoles. En variante, le pneumatique peut être monté individuellement entre deux flasques.

Ces pneumatiques sont tout particulièrement adaptés aux rouleaux agricoles, qui sont habituellement tirés par un tracteur en étant placés en arrière d'outils de travail du sol, le rouleau pouvant être éventuellement suivi par d'autres outils de travail.

Une application typique est celle des rouleaux pour semoirs, dans lesquels le tracteur tire une machine formée d'une combinaison d'outils semi-portés comprenant : des outils de travail du sol ; ensuite, le rouleau avec ses pneumatiques en dôme qui créent des sillons dans le sol préalablement ameubli par les outils ; puis des semoirs qui viennent déposer des graines ou des semences dans les sillons formés par le passage du rouleau ; et enfin des outils d'enfouissage pour enfouir les graines.

Dans d'autres applications, le rouleau équipé de ses pneumatiques à profil en dôme est placé derrière des outils de travail du sol, par exemple pour assurer le déchaumage du sol après moisson. Dans ce cas, le rouleau n'est pas suivi d'outils, il sert alors essentiellement à rappuyer le sol.

Plus précisément, le pneumatique adapté à ces usages et décrit dans le FR-A-2 763 279 précité comprend un fourreau central propre à être enfilé autour d'un tube horizontal de la machine agricole, et au moins une partie de roulement à profil en dôme comportant une bande de roulement reliée au fourreau par deux flancs de manière à délimiter un espace annulaire creux de section transversale réduite par rapport à la section transversale du profil en dôme.

L'espace annulaire creux n'est pas gonflé, et il peut communiquer avec le milieu ambiant par l'intermédiaire d'un orifice traversant l'épaisseur du fourreau et assurant notamment l'équilibrage des pressions en cours d'utilisation. Du fait de la forme en dôme et de la présence de l'espace annulaire creux de section transversale réduite et non gonflé, la bande de roulement du pneumatique ne s'affaisse pas trop, tout en possédant une souplesse suffisante pour lui permettre de subir des déformations et d'être autonettoyante.

Jusqu'à présent, ces pneumatiques ont toujours été réalisés avec une surface lisse à l'endroit de la bande de roulement et des flancs.

Cependant, dans certaines conditions extrêmes, la présence d'une surface lisse n'est pas favorable.

Par exemple, sur sol humide, il peut arriver que le rouleau ne soit pas entraîné en rotation, au moins de façon temporaire, créant ainsi un lissage de la terre mouillée, phénomène connu sous le nom de "battance". Il en résulte la formation d'un sillon lisse qui, sous l'action du soleil, peut créer une croûte empêchant la germination des graines.

Par ailleurs, dans le cas du déchaumage, la surface lisse ne permet pas un écrasement adéquat des mottes de terre sur un sol sec.

On connaît en outre, d'après US-A-5 628 372, un pneumatique gonflable classique pourvu à sa périphérie d'une pluralité de crêtes en relief. Ces crêtes sont auto-nettoyantes et forment dans le sol une empreinte qui empêche l'érosion du sol et améliore l'irrigation du sol.

L'un des buts de l'invention est de proposer un pneumatique du type précité qui résolve ces inconvénients, tout en conservant les caractéristiques avantageuses évoquées plus haut.

L'invention a également pour objet de proposer un tel pneumatique qui permette une utilisation non seulement en champ, mais également un déplacement sur route sans relevage du rouleau.

Un autre but encore de l'invention est de proposer un tel pneumatique qui, tout en conservant sa souplesse générale, présente par endroits des régions de raideur plus importante, susceptibles de favoriser par exemple le poinçonnement des mottes de terre.

L'invention propose à cet effet un pneumatique du type défini en introduction tel que divulgué par le FR-A-2 763 279 précité, qui comporte une pluralité d'indentations périphériques formées en creux dans la bande de roulement et réparties dans la direction circonférentielle au sommet du profil en dôme, et dans lequel les indentations s'étendent selon une direction générale oblique par rapport à l'axe du pneumatique, et de manière alternée d'une indentation à l'autre dans la direction circonférentielle.

En d'autres termes, l'invention propose de créer des "crampons en creux" ou "crampons négatifs" sur le sommet de la bande de roulement : lorsque le rouleau se déplace pour former des sillons, la présence de ces crampons en creux introduit une discontinuité dans le sillon, ce qui évite le phénomène de battance mentionné précédemment.

Dans le cas où ces pneumatiques sont utilisés par exemple pour un rappuyage en ligne après déchaumage, la présence des indentations facilite également l'écrasement des mottes de terre, spécialement lorsque l'on travaille sur un sol sec.

La présence de ces indentations élargit ainsi la plage d'utilisation du pneumatique, donc sa polyvalence dans des conditions extrêmes : terre mouillée susceptible d'engendrer un phénomène de battance, ou au contraire sol sec rendant plus difficile l'écrasement des mottes de terre après déchaumage.

Il convient de souligner par ailleurs que, ces indentations étant en creux, elles ne peuvent pas s'user lorsque le rouleau est déplacé sur la route, contrairement à des crampons classiques, en saillie.

Du fait de la disposition des indentations, le pneumatique peut être utilisé dans les deux directions et/ou enfilé indifféremment dans un sens ou dans l'autre lors de l'empilement des pneumatiques sur le tube central du rouleau.

Avantageusement, la paroi intérieure de l'espace annulaire comporte des renflements dans les régions situées au droit des indentations.

Ces renflements peuvent être notamment formés lors du moulage du pneumatique et, comme ils sont disposés sur la périphérie de la bande de roulement et à intervalles réguliers, ils créent une succession de points durs régulièrement espacés qui facilitent par exemple le poinçonnement des mottes, ces points durs ne venant cependant pas au détriment de la souplesse générale du pneumatique.

De plus, ces renflements rigidifient par intermittence la partie en pointe du profil du dôme, ce qui, ici encore, favorise l'émiettement du sol.

Divers perfectionnements et variantes de ce pneumatique peuvent être envisagés.

Il est notamment possible de munir les flancs de la partie de roulement d'empreintes creuses latérales, ou de crampons saillants latéraux, répartis dans la direction circonférentielle.

Ces reliefs latéraux (empreintes creuses ou crampons saillants) permettent de rigidifier localement le pneumatique en des endroits espacés dans la direction circonférentielle, avec les mêmes avantages que ceux indiqués plus haut à propos des points durs en périphérie de la bande de roulement.

Les empreintes creuses étant décalées vers l'intérieur du pneumatique par rapport au flanc, elles ne gênent pas l'action du grattoir lorsque les pneumatiques sont utilisés avec un semoir.

Les crampons saillants permettent d'élargir la vallée dans le cas d'un sillon pour semoir ou, pour d'autres applications, de casser les mottes de terre sur une région plus large. Ils ne font pas saillie en direction radiale par rapport à la bande de roulement, pour prévenir une usure lorsque les pneumatiques roulent sur une route.

Les flancs du pneumatique peuvent être des flancs inclinés à double pente, où les flancs opposés forment entre eux à leur partie haute (c'est-à-dire près de la bande de roulement) un angle supérieur à celui qu'il forme à la partie basse (près du fourreau central).

On va maintenant décrire divers exemples de réalisation d'un pneumatique selon l'invention, en référence aux dessins annexés où les mêmes références numériques désignent d'une figure à l'autre des éléments identiques ou fonctionnellement semblables. Sur ces dessins :
- la figure 1 est une vue en élévation d'un pneumatique selon une première forme de réalisation de l'invention ;
- la figure 2 est une vue de face d'un rouleau équipé d'une série de pneumatiques tels que celui illustré figure 1 ;
- la figure 3 est une vue en perspective d'une partie du pneumatique de la figure 1, partiellement en coupe ;
- la figure 4 est une section transversale agrandie, selon la ligne IV-IV de la figure 1, du pneumatique de la figure 1 ;
- la figure 5 est une vue partielle en élévation, agrandie, illustrant un premier perfectionnement à la forme de réalisation de la figure 1 ;
- la figure 6 est une vue en perspective d'une partie du pneumatique de la figure 5, partiellement en coupe ;
- la figure 7 est une section transversale, selon la ligne VII-VII de la figure 5, du pneumatique de la figure 5 ;
- la figure 8 est une vue partielle en élévation, agrandie, illustrant une variante du perfectionnement de la forme de réalisation de la figure 5 ;
- la figure 9 est une vue en perspective d'une partie du pneumatique de la figure 8, partiellement en coupe ;
- la figure 10 est une vue partielle, de face, d'un rouleau équipé d'une pluralité de pneumatiques selon la figure 8 ;
- la figure 11 est une vue partielle en élévation, agrandie, illustrant un second perfectionnement à la forme de réalisation de la figure 1 ;
- la figure 12 est une vue en perspective d'une partie du pneumatique de la figure 11, partiellement en coupe ;
- la figure 13 est une vue partielle, de face, d'un rouleau équipé d'une pluralité de pneumatiques selon la figure 11 ;
- la figure 14 illustre une variante de la première forme de réalisation de l'invention, où le pneumatique comporte deux bandes de roulement attenantes ;
- la figure 15 est une vue perspective d'une seconde forme de réalisation du pneumatique de l'invention, adaptée à un montage entre des flasques ; et
- la figure 16 est une vue partielle agrandie, en coupe, du pneumatique de la figure 5 monté entre deux flasques.

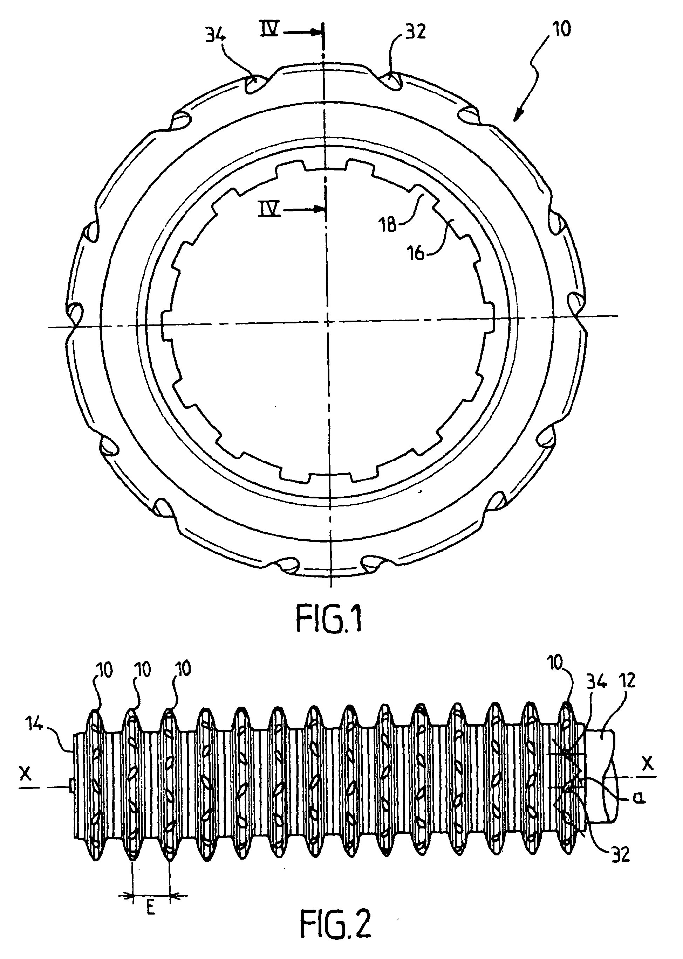

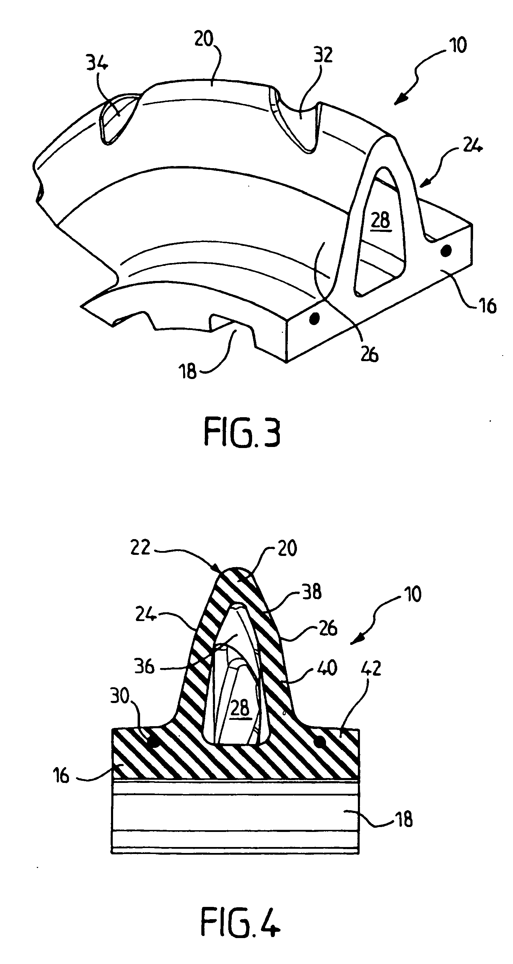

On se référera tout d'abord aux figures 1 à 4, qui illustrent un pneumatique 10 selon une première forme de réalisation de l'invention.

Cette forme de pneumatique est adaptée à la réalisation d'un rouleau agricole, par exemple un rouleau pour semoir, comprenant un tube central 12 monté à rotation autour d'un axe X-X et sur lequel sont montés une succession de pneumatiques identiques 10.

Le FR-A-2 841 733, au nom de la Demanderesse, décrit la manière de réaliser un tel rouleau à partir d'un empilement de pneumatiques à profil en dôme. Essentiellement, Ces pneumatiques sont enfilés de façon jointive les uns contre les autres et maintenus à chaque extrémité de l'empilement, par exemple au moyen d'une joue d'extrémité 14 assurant le serrage et le maintien de la série de pneumatiques. Les divers pneumatiques de l'empilement peuvent être en outre solidarisés entre eux par des éléments d'assemblage appropriés (non représentés), par exemple ceux décrits dans le FR-A-2 784 331, au nom de la Demanderesse, auquel on pourra se référer pour de plus amples détails. Chaque pneumatique comporte un fourreau central 16 propre à être enfilé sur le tube 12 et muni de cannelures 18 coopérant avec des cannelures conjuguées du tube 12 pour empêcher toute rotation relative des pneumatiques 10 par rapport au tube 12.

De cette manière, l'empilement des pneumatiques et le tube forment un ensemble solidaire constituant un rouleau susceptible d'être monté sur un bâti-support d'une machine agricole comportant d'autres éléments (semoir, timon, etc.), cette machine étant tractée dans une direction perpendiculaire au plan de la figure 2. Le déplacement du bâti-support entraîne par réaction des pneumatiques sur le sol la rotation du rouleau mené, et les pneumatiques vont créer dans le sol des sillons parallèles entre eux, sillons dans lesquels pourront par exemple être semées des graines. L'espacement E entre les sillons correspond à l'intervalle entre les bandes de roulement des pneumatiques adjacents. Pour ajuster cet espacement E, il est éventuellement possible d'interposer entre les pneumatiques adjacents des éléments annulaires intercalaires dont la largeur en direction axiale sera choisie en fonction de l'écart E voulu pour les sillons.

Le pneumatique approprié à l'usage que l'on vient d'indiquer est du type général décrit dans le FR-A-2 763 279 précité, c'est-à-dire dont la partie destinée à venir en contact avec le sol à travailler, ou avec la chaussée de la route, est une partie formant bande de roulement 20 à profil en dôme 22, reliée à la partie formant fourreau 16 par deux flancs opposés 24, 26 définissant à l'intérieur du pneumatique un espace annulaire 28 de section transversale réduite par rapport à la section transversale du profil d'ensemble en dôme du pneumatique. Cet espace annulaire creux 28 n'est pas gonflé, il peut communiquer avec le milieu ambiant par l'intermédiaire d'un orifice (non représenté) traversant l'épaisseur du fourreau 16. Cet orifice, outre l'équilibrage des pressions en utilisation, sert lors de la fabrication du pneumatique à l'injection d'air sou pression lors de l'étape de vulcanisation.

Il est en effet souhaitable que le pneumatique puisse se déformer quelque peu dans la région comprise entre la bande de roulement 20 et le fourreau 16 pour faciliter le décollement de la terre qui, sinon, aurait tendance à adhérer au pneumatique dans la région des flancs 24, 26. Cette déformation du pneumatique, qui lui procure une souplesse suffisante pour amortir les déformations et être autonettoyant, est cependant limitée par la forme en dôme, qui évite que la bande de roulement ne s'affaisse de façon excessive.

Le fourreau central peut être mécaniquement renforcé par un ou plusieurs câbles torsadés 30 ou un jonc métallique noyé dans la matière du pneumatique, assurant en particulier un meilleur maintien en appui contre le tube 12 en dépit des sollicitations mécaniques reçues par le pneumatique, qui peuvent être assez intenses et brutales, notamment sur la route.

De façon caractéristique de l'invention, le pneumatique 10 comporte au sommet de la bande de roulement des indentations telles que 32, 34, formées à la périphérie du pneumatique et réparties en direction circonférentielle. Très avantageusement, ces indentations sont disposées obliquement et de manière alternée, comme illustré figure 2, afin que le pneumatique puisse être monté indifféremment dans un sens ou dans l'autre et/ou être utilisé dans les deux directions.

Les indentations peuvent, comme illustré, présenter une surface approximativement cylindrique intersectant la surface extérieure de la bande de roulement 20, l'axe principal de ces indentations formant avec l'axe X-X du pneumatique un angle a (figure 2) de l'ordre de 45 à 60°, alternativement dans un sens et dans l'autre.

Ces indentations, formées en creux dans la bande de roulement, créent des renflements 36 dans l'espace annulaire creux 28 au moment du moulage. Comme ces renflements 36 sont disposés sur la périphérie de la bande de roulement et à intervalles réguliers, ils forment à cet endroit une succession de points durs qui, par exemple, facilitent le poinçonnement des mottes sans pour autant nuire à la souplesse générale du pneumatique. Ces renflements 36 ont également pour propriété de rigidifier par intermittences la partie la plus en pointe du profil du dôme, favorisant l'émiettement du sol.

Pour optimiser la déformation contrôlée du pneumatique et tenir compte de la présence des indentations 32, 34 et des reliefs 36 correspondants, les flancs 24, 26 du pneumatique présentent de préférence une inclinaison à double pente, avec une partie haute 38 (au voisinage de la bande de roulement 20) où les flancs forment entre eux un angle supérieur à celui qu'ils forment à leur partie basse 40 (au voisinage du fourreau 16). Les valeurs respectives d'angle entre flancs opposés sont par exemple de l'ordre de 40 à 50° en partie haute pour 20 à 30° en partie basse, les deux parties se raccordant approximativement à mi-hauteur des flancs.

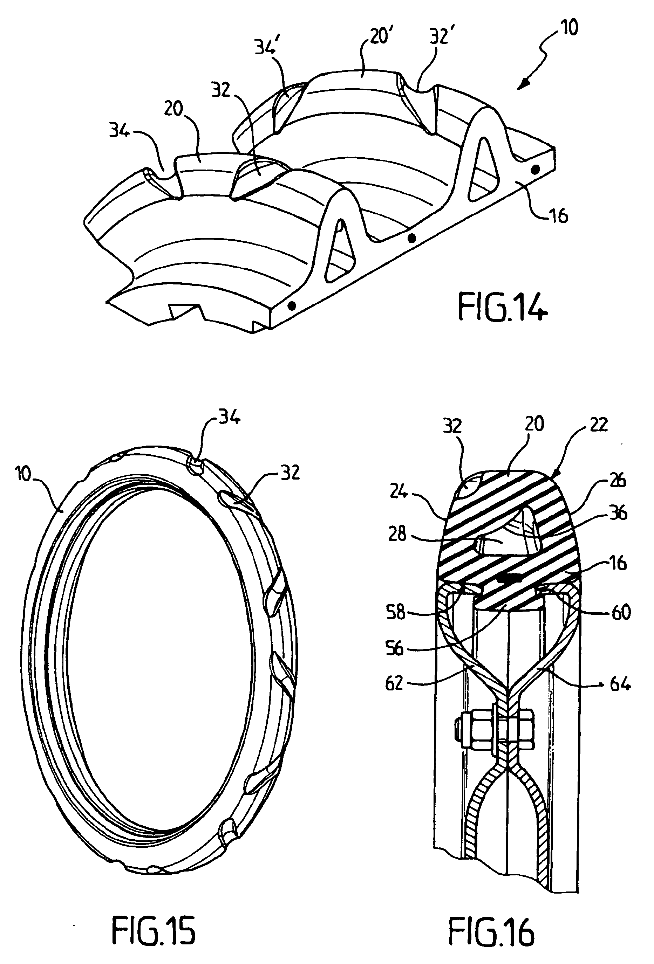

Par ailleurs, dans la forme de réalisation illustrée, le profil du dôme se raccorde au fourreau 16 par un large talon 42, qui déborde de part et d'autre des flancs. Cette configuration est adaptée à une application où les pneumatiques sont empilés de manière jointive, comme illustré figure 2, mais cette géométrie particulière du pneumatique n'est pas limitative et l'on verra, notamment en référence aux figures 15 et 16, qu'il est possible de faire appel à des pneumatiques avec un talon beaucoup plus étroit, notamment dans le cas de pneumatiques montés individuellement entre deux flasques.

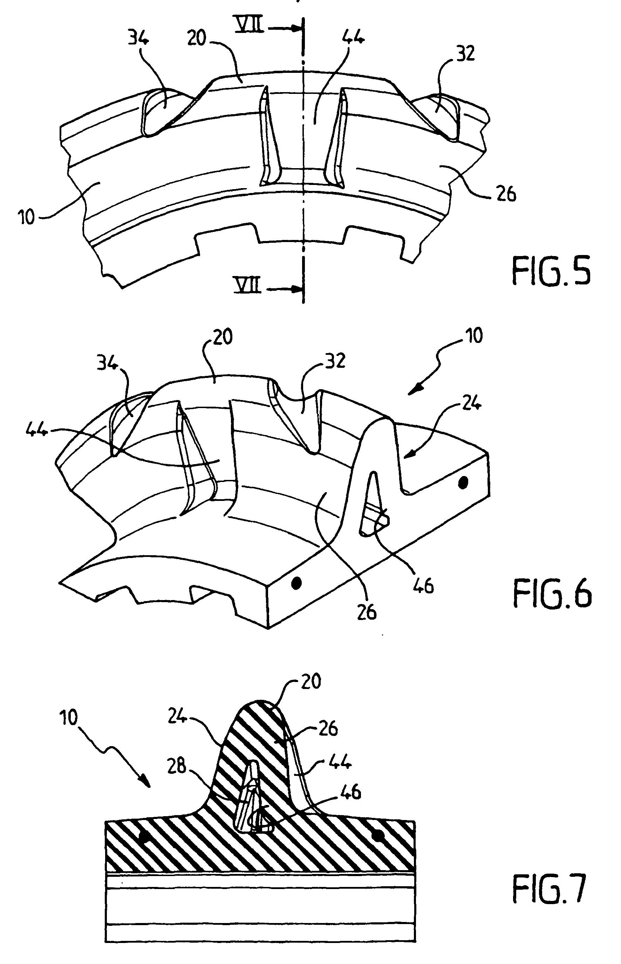

Les figures 5 à 7 illustrent un perfectionnement apporté au pneumatique des figures 1 à 4.

Le pneumatique y comporte, en plus des indentations 32, 34 formées dans la bande de roulement 20, des empreintes creuses latérales 44 formées dans les flancs 24, 26 de la partie de roulement. Ces empreintes 44 sont, en direction circonférentielle, de préférence disposées en alternance sur l'un des flancs et sur l'autre, et sont situées, toujours en direction circonférentielle, dans l'intervalle compris entre des indentations successives 32, 34. Ces empreintes 44 étant creuses, donc décalées vers l'intérieur du pneumatique par rapport au flanc, elles n'empêchent pas l'action d'un grattoir lorsque les pneumatiques sont utilisés avec un semoir. Cependant, pour permettre l'évacuation de la terre, on donne à ces empreintes une forme en dépouille.

La formation de ces empreintes 44 lors du moulage du pneumatique va créer dans l'espace annulaire creux 28 des renflements 46 qui, comme les renflements 36 créés par les indentations 32, 34, rigidifient localement le pneumatique sans nuire pour autant à sa souplesse générale.

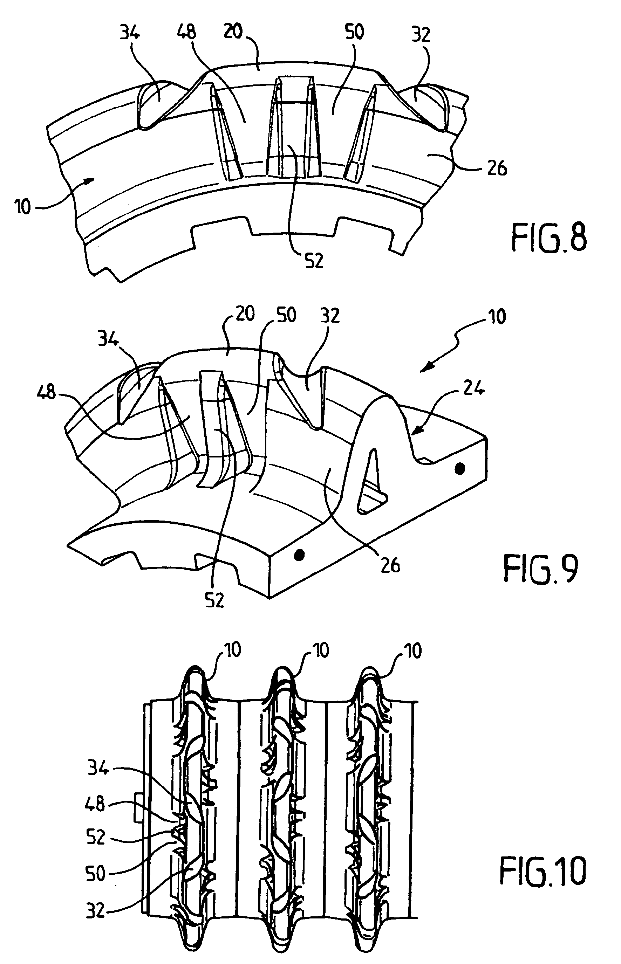

Les figures 8 à 10 illustrent une variante du perfectionnement des figures 5 à 7, où les empreintes creuses sont formées par paires 48, 50.

Les paires d'empreintes sont, dans la direction circonférentielle, disposées entre des indentations 32, 34, et en alternance sur l'un des flancs et sur l'autre, comme on peut le voir notamment sur la vue de face de la figure 10. Cette variante présente l'avantage de définir entre les paires d'empreintes creuses 48, 50 un crampon 52 améliorant l'adhérence du pneumatique avec la terre, notamment lorsque celle-ci est très humide, sans pour autant que ce crampon 52 ne fasse saillie par rapport au flanc et ne gêne donc l'action d'un grattoir.

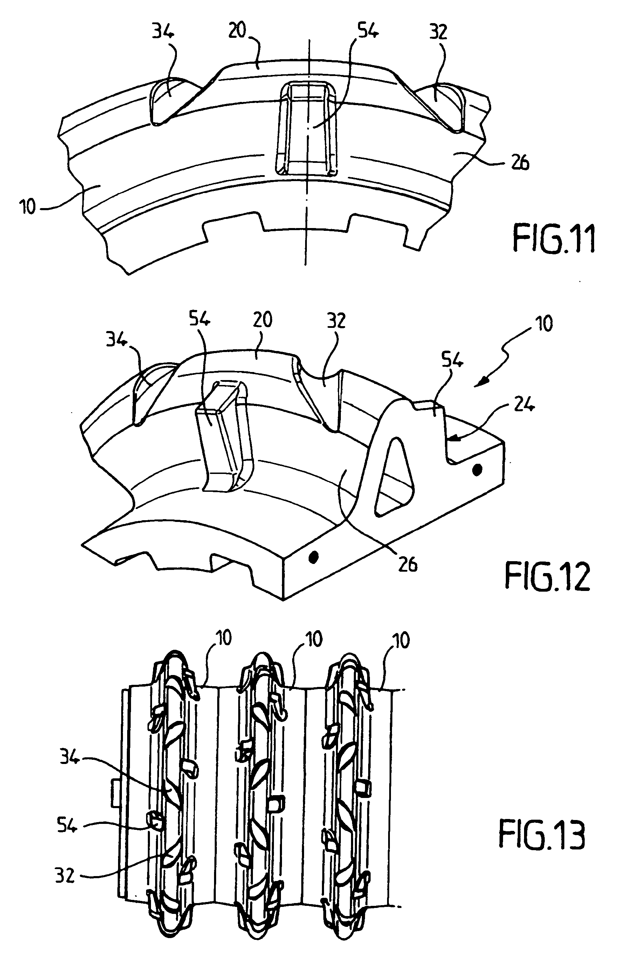

Les figures 11 à 13 illustrent un autre perfectionnement, dans lequel, en plus des indentations 32, 34 formées dans la bande de roulement 20, le pneumatique comporte sur les flancs 24, 26 des crampons latéraux 54 faisant saillie des flancs en direction axiale.

En direction circonférentielle, ces crampons 54 sont de préférence disposés en alternance sur l'un des flancs et sur l'autre, et sont situés, toujours en direction circonférentielle, dans l'intervalle compris entre des indentations successives 32, 34. Ils permettent d'élargir la vallée dans le cas d'un sillon pour semoir ou, dans d'autres applications, de casser les mottes de terre sur une région plus large. En direction radiale, ils restent en retrait par rapport à la bande de roulement 20, ce qui prévient toute usure lorsque les pneumatiques roulent sur une route.

La figure 14 illustre une variante de réalisation du pneumatique des figures 1 à 4, où un même pneumatique comporte plusieurs parties de roulement à profil en dôme.

Dans l'exemple illustré, le pneumatique comporte deux profils en dôme adjacents définissant deux bandes de roulement 20, 20' parallèles. Chaque bande de roulement est pourvue d'indentations semblables 32, 34 et 32', 34' réalisées de la même manière qu'indiqué plus haut, avec une disposition oblique et de manière alternée. De préférence, l'inclinaison des indentations en vis-à-vis 32 et 32', ou 34 et 34', est alternée d'une bande de roulement 20 à la bande de roulement adjacente 20'.

Les figures 15 et 16 illustrent une autre forme de mise en oeuvre, destinée à des pneumatiques devant être montés individuellement entre deux flasques d'une jante.

Dans ce cas, la partie inférieure 16 formant le fourreau central n'est pas plus large que la partie de roulement 20, et elle comporte un talon 56 prolongeant radialement vers l'intérieur sa face interne 58. Ce talon 56 comporte également un épaulement définissant une gorge périphérique 60 permettant le serrage entre les rebords homologues de deux flasques 62, 64 sur lesquels sera monté le pneumatique. Pour le reste, le pneumatique est réalisé de façon semblable, avec des indentations obliques et alternées 32, 34 formées sur la bande de roulement 20, au sommet du profil en dôme 22.

L'invention n'est pas limitée aux formes de réalisation décrites précédemment et est susceptibles de nombreuses variantes de réalisation. Ainsi, par exemple, bien que l'invention ait été décrite en référence à des pneumatiques présentant un fourreau continu, il est possible de prévoir un fourreau interrompu comme enseigné par FR-A-2 799 692. Cette publication montre en effet un pneumatique de type semi-creux, dont le fourreau est interrompu pour ménager une fente annulaire propre à recevoir une bague d'insertion.

Le pneumatique de l'invention peut être réalisé à partir des mêmes techniques de base que pour les pneumatiques semi-creux à surface lisse. Il s'agit principalement de techniques de fabrication par extrusion et moulage ou encore par injection.

## Revendications

1. Pneumatique (10) du type semi-creux pour une machine agricole, notamment pour une machine comportant un rouleau muni d'une série de pneumatiques montés sur un tube horizontal (12), ce pneumatique comprenant un fourreau central (16) et au moins une partie de roulement à profil en dôme (22) comportant une bande de roulement (20) reliée au fourreau (16) par deux flancs (24, 26) de manière à délimiter un espace annulaire creux (28) de section transversale réduite par rapport à la section transversale du profil en dôme, **caractérisé en ce qu'**il comporte une pluralité d'indentations périphériques (32, 34) formées en creux dans la bande de roulement (20) et réparties dans la direction circonférentielle au sommet du profil en dôme, et **en ce que** les indentations (32, 34) s'étendent selon une direction générale (a) oblique par rapport à l'axe (XX) du pneumatique, et de manière alternée d'une indentation à l'autre dans la direction circonférentielle.

2. Pneumatique selon la revendication 1, **caractérisé en ce que** la paroi intérieure de l'espace annulaire (28) comporte des renflements (36) dans les régions situées au droit des indentations (32, 34).

3. Pneumatique selon la revendication 1, **caractérisé en ce que** les flancs (24, 26) comportent des empreintes creuses latérales (44 ; 48, 50) réparties dans la direction circonférentielle.

4. Pneumatique selon la revendication 1, **caractérisé en ce que** les flancs (24, 26) comportent des crampons saillants latéraux (54) répartis dans la direction circonférentielle.

5. Pneumatique selon la revendication 3 ou 4, **caractérisé en ce que** les empreintes creuses latérales (44 ; 48, 50) ou les crampons saillants latéraux (54) des flancs (24, 26) sont disposés dans la direction circonférentielle en alternance avec les indentations (32, 34) de la bande de roulement.

6. Pneumatique selon la revendication 4, **caractérisé en ce que** les crampons saillants latéraux (54) des flancs (24, 26) ne font pas saillie en direction radiale par rapport à la bande de roulement (20).

7. Pneumatique selon la revendication 1, **caractérisé en ce que** les flancs (24, 26) sont des flancs inclinés à double pente, les flancs opposés formant entre eux dans leur région haute (38) un angle supérieur à celui qu'ils forment dans leur région basse (40).

## Claims

1. Tyre (10) of the semi-hollow type for an agricultural machine, notably for a machine comprising a roller fitted with a series of tyres mounted on a horizontal tube (12), this tyre having a central sleeve (16) and at least one tread section with a dome-shaped profile (22) comprising a tread (20) connected to the sleeve (16) by two sidewalls (24, 26) so as to delimit a hollow annular space (28) of reduced cross-section by comparison with the cross-section of the dome-shaped profile, **characterised in that** it comprises a plurality of peripheral indentations (32, 34) recessed in the tread (20) and distributed in the circumferential direction at the top of the dome-shaped profile, and **in that** the indentations (32, 34) extend in a general direction (a) which is oblique in relation to the axis (XX) of the tyre, and alternating from one indentation to another in the circumferential direction.

2. Tyre according to claim 1, **characterised in that** the inner wall of the annular space (28) comprises swellings (36) in the regions located in line with the indentations (32, 34).

3. Tyre according to claim 1, **characterised in that** the sidewalls (24, 26) comprise lateral hollow impressions (44; 48, 50) distributed in the circumferential direction.

4. Tyre according to claim 1, **characterised in that** the sidewalls (24, 26) comprise lateral projecting grippers (54) distributed in the circumferential direction.

5. Tyre according to claim 3 or 4, **characterised in that** the lateral hollow impressions (44; 48, 50) or the lateral projecting grippers (54) of the sidewalls (24, 26) are arranged in the circumferential direction, alternating with the indentations (32, 34) of the tread.

6. Tyre according to claim 4, **characterised in that** the lateral projecting grippers (54) of the sidewalls (24, 26) do not project radially relative to the tread (20).

7. Tyre according to claim 1, **characterised in that** the sidewalls (24, 26) are sidewalls that slope with a dual gradient, the opposing sidewalls forming between them, in their upper region (38), an angle greater than the one formed by them in their lower region (40).

## Patentansprüche

1. Luftreifen (10) vom halbhohlen Typ für landwirtschaftliche Maschinen, insbesondere für eine Maschine, die eine Walze trägt, die mit einer Reihe von Luftreifen versehen ist, die auf einem horizontalen Rohr (12) montiert sind, wobei der Luftreifen ein zentrales Futteral (16) und wenigstens einen Rollabschnitt mit Kuppelprofil (22) aufweist, der eine Lauffläche (20) aufweist, die mit dem Futteral (16) durch zwei Flanken (24, 26) verbunden ist, derart dass ein hohler ringförmiger Raum (28) von verringertem Querschnitt bezüglich des Querschnitts des Kuppelprofils begrenzt wird,
**dadurch gekennzeichnet, dass** er eine Mehrzahl von Umfangseinzahnungen (32, 34) aufweist, die als Vertiefung in der Lauffläche (20) ausgebildet sind und in Umfangsrichtung auf dem Scheitel des Kuppelprofils verteilt angeordnet sind, und
dass die Einzahnungen (32, 34) sich entlang einer allgemein schrägen Richtung (a) bezüglich der Achse (XX) des Luftreifens und auf abwechselnde Weise von einer Einzahnung zur anderen in Umfangsrichtung erstrecken.

2. Luftreifen nach Anspruch 1, **dadurch gekennzeichnet, dass** die innere Seitenwand des ringförmigen Raums (28) Verdickungen (36) in Bereichen aufweist, die sich direkt bei den Einzahnungen (32, 34) befinden.

3. Luftreifen nach Anspruch 1, **dadurch gekennzeichnet, dass** die Flanken (24, 26) hohle Seitenvertiefungen (44; 48, 50) aufweisen, die in Umfangsrichtung verteilt angeordnet sind.

4. Luftreifen nach Anspruch 1, **dadurch gekennzeichnet, dass** die Flanken (24, 26) seitlich vorspringende Krampen (54) aufweisen, die in Umfangsrichtung verteilt angeordnet sind.

5. Luftreifen nach Anspruch 3 oder 4, **dadurch gekennzeichnet, dass** die seitlichen hohlen Vertiefungen (44; 48, 50) oder die seitlich vorspringenden Krampen (54) der Flanken (24, 26) in Umfangsrichtung abwechselnd mit den Einzahnungen (32, 34) der Lauffläche angeordnet sind.

6. Luftreifen nach Anspruch 4, **dadurch gekennzeichnet, dass** die seitlich vorspringenden Krampen (54) der Flanken (24, 26) in radialer Richtung bezüglich der Lauffläche (20) nicht vorspringen.

7. Luftreifen nach Anspruch 1, **dadurch gekennzeichnet, dass** die Flanken (24, 26) geneigte Flanken mit doppelter Neigung sind, wobei die einander gegenüberliegenden Flanken untereinander in ihrem oberen Bereich (38) einen Winkel bilden, der größer ist als jener, den sie in ihren unteren Bereichen (40) bilden.
